(19)

Europäisches
Patentamt
European
Patent Office
Office européen
des brevets

(11) **EP 0 990 896 B1**

(12) **EUROPEAN PATENT SPECIFICATION**

(45) Date of publication and mention
of the grant of the patent:
**25.01.2012 Bulletin 2012/04**

(51) Int Cl.:
*G01N 27/447* (2006.01)    *G01N 21/64* (2006.01)

(21) Application number: **99307163.8**

(22) Date of filing: **09.09.1999**

(54) **Large area image analysing apparatus**

Analysegerät für ein grossflächiges Bild

Dispositif d'analyse d'une image à grande surface

(84) Designated Contracting States:
**AT BE CH CY DE DK ES FI FR GB GR IE IT LI LU MC NL PT SE**

(30) Priority: **10.09.1998 US 99718**

(43) Date of publication of application:
**05.04.2000 Bulletin 2000/14**

(73) Proprietor: **WALLAC OY**
**20101 Turku (FI)**

(72) Inventors:
• **Adams, Matthew,**
**c/o Life Science Rescources Ltd**
**Great Shelford,**
**Cambridge CB2 5LQ (GB)**
• **Mackay, Craig,**
**c/o Life Science Resources Ltd**
**Great Shelford,**
**Cambridge CB2 5LQ (GB)**
• **Chen, Jim,**
**c/o Life Science Resources Ltd**
**Great Shelford,**
**Cambridge CB2 5LQ (GB)**
• **Mason, William,**
**c/o Life Science Resources Ltd**
**Great Shelford,**
**Cambridge CB2 5LQ (GB)**

• **Hoyland, John,**
**c/o Life Science Resources Ltd.**
**Great Shelford,**
**Cambridge CB2 5LQ (GB)**
• **Nightingale, Nick,**
**c/o Life Science Resources Ltd**
**Great Shelford,**
**Cambridge CB2 5LQ (GB)**

(74) Representative: **Haley, Stephen**
**Gill Jennings & Every LLP**
**The Broadgate Tower**
**20 Primrose Street**
**London EC2A 2ES (GB)**

(56) References cited:
**EP-B- 0 214 713      WO-A-95/21377**
**WO-A-96/02824      WO-A-97/20198**
**DE-A- 4 011 730      DE-A- 4 200 705**

• **RUSS J C: "SEGMENTATION AND THRESHOLDING" IMAGE PROCESSING HANDBOOK,GB,CRC PRESS, LONDON,1 January 1995 (1995-01-01), pages 347-405, XP000574674**

EP 0 990 896 B1

**Description**

This invention relates to a large area image scanning and analysis apparatus which may be used especially for the high resolution analysis of electrophoresis gels, membrane blots, autoradiographs and other macroscopic imaging applications.

Electrophoresis is a well known technique for separating molecules of chemical and biological matter by charge and/or mass.

It is generally as important an analytical technique as chromatography and spectroscopy. It has particular benefits because it has a wide dynamic range, being able to separate for analysis comparatively small molecules, such as polypeptides, to extremely large molecules, such as carbohydrates and double-stranded DNA.

Many analytical areas in the fields of microbiology, epidemiology, toxicology, clinical research, diagnostics, and drug discovery all use electrophoresis as a routine technique to extend and enhance the understanding of constituent molecules.

Electrophoresis is quite simple. A clear gel, made either of a synthetic or natural material is placed in a gel-running system that allows separate liquid reservoirs to contact the top and bottom of the slab. After samples are loaded in slots at the top of the slab an electric field is applied across the slab. The charge associated with the samples causes the samples to move through the gel at a rate determined by the size and charge of individual molecules in the sample, and also the electric field. In general, molecules of a larger size or smaller charge move more slowly than those which are smaller or are more highly charged. Separation is stopped by removal of the voltage and/or by the molecules reaching positions at which frictional or electrical forces balance to prevent further movement.

After this stage the gel is analysed to determine precise positions of separating molecules. This is usually done by staining the gel and evaluating stained bands. A reference sample is often run at the same time as the analysis, so that the position of the stain bands can be compared to the reference.

In many applications, a simple chemical stain is employed and within a few hours a pattern emerges. Another popular technique is to immerse the gel in a silver nitrate solution, with any proteins present incorporating the silver and becoming visible. Radiographic techniques, employing isotopes, have also become popular in recent years.

Each of these techniques has various benefits and disadvantages.

In particular, many are extremely time consuming and labour intensive.

WO9521377A, DE4011730A and WO9602824A all disclose scanning electrophoresis systems requiring laser light sources.

The present invention seeks to overcome the problems associated with the prior art. This may make specific use of the ability to label proteins or DNA or other material with stains which may include pre-labelled fluorescent markers as disclosed in US-A-4874492 or EP0214713B1 or it may include other post-electrophoresis labelling fluorescent stains, or other stains which are luminescent or non-fluorescent or non-luminescent, namely stains such as coomassie blue, or silver, or stains which produce dense reaction products such as avidin-biotin or horseradish peroxidase or many others in the literature and commercially available. It may also include autoradiographs of gels or blots or other specimens where labelling employed is a radioactive marker subsequently visualised on film or by some other means such as a radiation-sensitive film or emulsion.

The invention consists of an apparatus for acquiring high resolution digital images from a large area specimen, such as the result of an electrophoresis of a fluorescent labelled sample in a gel, the apparatus comprising:

a light source for providing illuminating light to the specimen;
image receiving means for obtaining a high resolution image of the illuminated specimen; and
image analysing means for analysing the obtained image to determine the location of samples on the specimen and to provide data based thereon;
characterised in that the light source is a variable wavelength light source, variable across a continuous range of wavelengths,
the position of the image receiving means relative to the specimen is controlled stepwise in X and Y dimensions to selectively obtain images of a plurality of portions of the specimen, and
the image analysing means assembles the plurality of selectively obtained images of portions of the specimen into a single image.

The variable wavelength light source may illuminate the specimen from above, below, or the side of the gel with respect to the location of the position of the image obtaining means.

The image receiving means comprise an X-Y high precision movement stage, the position of which may be controllably varied in X and Y dimensions under microprocessor control, and a CCD camera, the position of the camera being controlled, in use, to direct selectively the image of a portion of the gel to the camera. The CCD camera may be cooled or uncooled, cooling being used to reduce the electronic noise of the camera and provide better signal-to-noise images, or improved image contrast, or longer integrating times on the chip for very low light level samples. The CCD camera may be capable of providing an analogue output into a frame grabber, or preferably a digital output of 12-16 bits or more. The image receiving means may image the gel directly or via a mirror or other optical pathway which may or may not provide a means of magnification or zooming, and may also provide a further manual or automated means of focussing the specimen image onto the camera. The image receiving means may also comprise one or more filters for selecting the wavelength of light which passes to the camera. The camera may be an analogue or digital CCD camera device and may be of the type disclosed in US-A-4874492 or EP0214713H 1 or US-A-5672881.

The light source may also comprise a filter or combination of filters so that the wavelength range of the illuminating light can be narrowed or varied. The light source may alternatively use any wavelength selection device, such as a monochromator by way of example. The light source may be varied by computer control so that images of the same topographical location of a large specimen may be taken at different wavelengths of light illumination, including excitation and emission wavelengths.

The image analysing means may be a standard PC or other computer, appropriately configured.

One example of the present invention will focus on the use of the large area imaging device to image an electrophoresis gel where a sample has been pre-labelled with one or more fluorescent, or possibly luminescent or histochemical, markers. This will now be described with reference to the accompanying drawings, in which:

Figure 1 is a schematic diagram showing one example of the present invention;
Figures 2A, 2B and 2C are schematic diagrams showing an example of the illuminating arrangements that may be employed with the present invention; and
Figure 3 is an example output of an image analysing means employed in an example of the present invention.

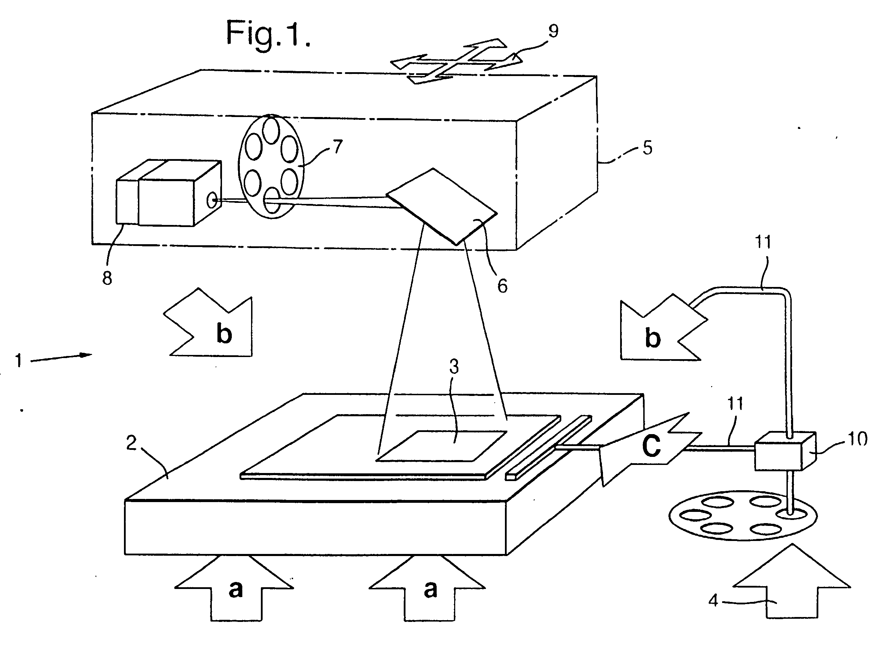

Referring to figure 1, an apparatus 1 according to the present invention has a stand 2 onto which a gel slab 3 is placed in use. A high intensity variable wavelength light source, such as a xenon or mercury or white light source available from many manufacturers, is arranged to provide, in use, illuminating light in the direction of either arrows A, B, or C, as will be described below. The illuminating light is modulated by the contents of the gel slab 3 upon which an electrophoresis method has been performed. The modulated light is then passed to an image receiving means 5 which, in this example, is a mirror 6, filter wheel 7, and cooled CCD camera 8. The camera may be an analogue or digital CCD camera device and may be of the type disclosed in US4874492 or EP0214713B1 or US5672881, which are incorporated herein by reference. The position of the CCD camera can be altered by two motors 9 connected to an XY stage, the motors 9 either being controlled by an operator or by an image analysing device coupled to the camera 8.

The direction of illumination provided by the light source 4 is, in this example, controlled by an optical switch 10 which controls the passage of illuminating light via optical fibres 11 dependent upon the type of specimen being used, and also upon the type of treatment that has been performed on the gel 3.

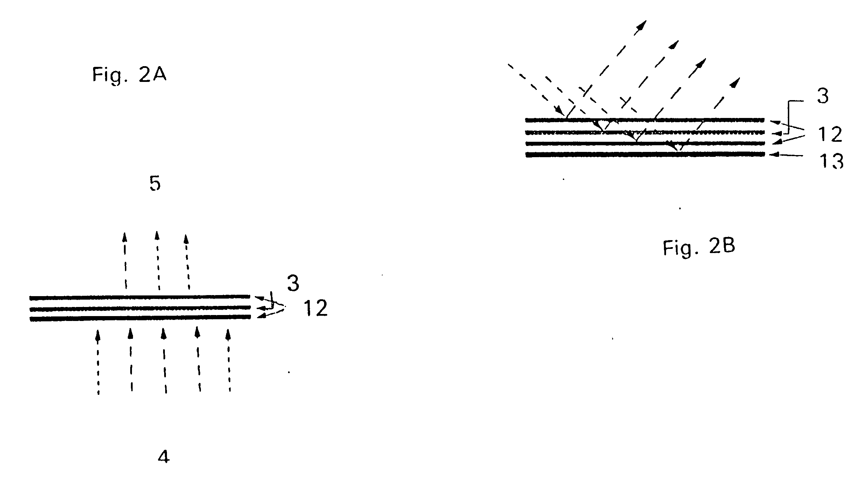

Figures 2A to 2C show in more detail the direction of illumination that is possible with the present invention. As can be seen from all of these figures, the specimen, in this example a gel slab 3, is retained within transparent plates 12 during imaging. The plates 12 are preferably made from glass.

In figure 2A illuminating light is passed through the gel slab 3 and onto the image receiving means 5. This is often referred to as "transverse illumination", and the wavelength may be varied by use of variable light sources, or filters, by use of a wavelength converting phosphor-coated plate to produce white light or narrow wavelength excitation light across the sample.

In figure 2B the illuminating light is transmitted towards the gel slab 3 from the same side of the gel slab 3 as the image receiving means 5, often known as "top illumination" or epi-illumination". The light may be delivered from the top in a number of ways. namely by telecentric illumination through the focusing lens on the image receiving means, or through one or two or more light guides offset from the lens and optical axis, or through a dichroic mirror positioned in the optical path. The light illuminated gel slab 3 is absorbed by fluorescent molecules in the gel, which emit fluorescent light in the direction of the image receiving means 5. A further reflective substrate 13 may be provided to reflect further illuminating light that passes through the gel slab 3 back up towards the image receiving means 5.

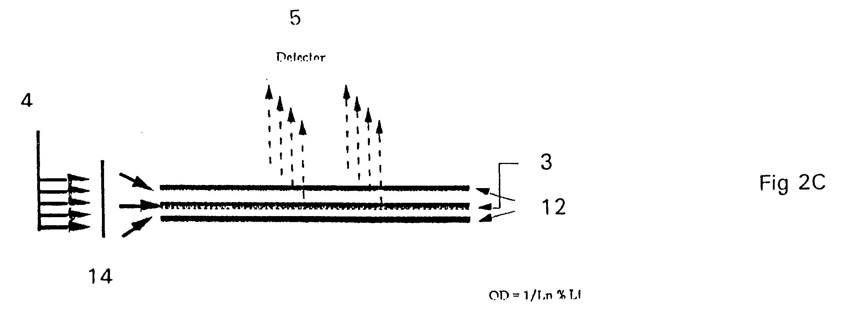

In the example of figure 2C, the preferred example for a fluorescent labelled gel, the light source 4 provides illuminating light which is focussed by a cylindrical lens 14 into the gel slab 3, with the glass plates 12 acting as a light guide. This arrangement produces the maximum illuminating efficiency.

As has been mentioned previously, image analysing means is attached, in use, to the output of the camera 8, and can be used to produce output data in many formats, the data being dependent upon the image received.

As mentioned previously, gels, blots or other such large area specimens may contain many hundreds or thousands of similar proteins or DNA, and so it is important to acquire images which maintain the highest resolution possible. In order to facilitate such imaging over a large area, it may be necessary to acquire numerous images of the specimen, each at high resolution. In the present invention, a single or multiple images may be acquired, each providing resolution of at least 50 microns in an X and Y dimension. The present invention has also been designed to enable the image receiving means to move mechanically in an X and Y dimension so that this high resolution may be maintained over a very large area. Such movement of the image receiving means may be accomplished at high precision by moving either the specimen or the image receiving means. In the present invention it was found convenient to move the image receiving means stepwise so that the whole area of the specimen may be imaged. Individual images collected may then be reassembled by a software stitching technique embodied in the image analysing means into a single image, while maintaining the full spatial resolution of at least 50 microns. Even higher resolutions may be achievable by different optical configurations, or different lens magnifications.

A feature of the present invention is the ability to control the scan time and resolution by using standard features of the CCD chip, which allow the acquisition and readout of subarrays of the CCD chip, or binning to provide either faster readout of the CCD chip or greater well-depth of the individual CCD pixels. This can enable higher imaging throughput, albeit at lower overall resolution.

A further feature of the present invention is the ability to acquire images of more than one fluorescent or luminescent or similar marker, such that several samples may be imaged on a single gel simultaneously or sequentially. This is sometimes called 'sample multiplexing'. The two samples may be either an unknown sample and a calibration standard, or two or more unknown samples. In this feature of the invention, two or more samples may be labelled with optical probes or markers differentiated by their wavelength spectra. For example, a red-emitting marker and a green-emitting marker may be used to label all the molecular components of two separate samples. Both red- and green-emitting samples are run on a single gel at the same time to give the possibility of precise sample registration and co-localisation of molecular components. The present invention provides the capability to acquire simultaneously or sequentially both red- and green- emitting samples by using automated control of excitation or emission wavelength. The image acquiring means may then overlay digitally or visually the two samples thus acquired for the purpose of comparing in a quantitative or semi-quantitative sense the amount of each molecular component. The image analysing means provides the necessary algorithms to compare the two multiplexed samples to reveal the extent of each molecular component on the specimen with the purpose of measuring up- or down-regulation of a specific molecular component. The chemical labelling methodology for running two or more samples on a single gel called sample multiplexing or differential gel electrophoresis is similar to that in US4874492 . EP0214713B1 , or in WO96/33406. and is incorporated by reference herein.

To further assist in achieving high fidelity and resolution of the resulting large area specimen image, the image analysing means also includes software algorithm to correct potential optical or mechanical distortions and artifacts. Lens distortion, for example, may be of two types, radial or decentring. Radial distortion affects the position of image points on a straight line radially out from the principal point of the camera. It is also known as a symmetric distortion, since it is a function only of radial distance and is the same at any angle around the principal point. Decentring distortion, often caused by the improper manufacture of the lens, has both a tangential and a radial asymmetric component. Tangential distortion occurs in a parallel orientation at each point across the image and varies as a function of the radial distance and the orientation of the line from the point to the principal point with respect to a reference direction. The radial asymmetric component is added to the radial component.

To correct for this distortion in the image analysing means, both radial and decentring distortion can be modeled as the magnitude of lens radial distortion for a lens focused at infinity is to use a polynomial series of odd powered terms:

$$\Delta r = k_1 r^3 + k_2 r^5 + k_3 r^7$$

and,

$$x_r = (x_{ij} - x_0) * \Delta r / r$$

$$y_r = (y_{ij} - y_0) * \Delta r / r$$

where $k_1, k_2, k_3$ are known as the coefficients of radial distortion and,

$$r^2 = (x - x_0)^2 + (y - y_0)^2$$

where r, x, $x_0$, y and $y_0$ are the radial distance, image plane co-ordinates and the origin of the image plane respectively.

The magnitude of lens decentering distortion $x_d$ and $y_d$ can also be approximately expressed by a polynomial function.

$$x_d = [p_1(r^2 + 2(x-x_O)^2) + 2p_2(x-x_O)(y-y_0)]$$

$$y_d = [p_2(r^2 - 2(y-y_0)^2) + 2p_1(x-x_0)(y-y_0)]$$

where $p_1$ and $P_2$ are the parameters of decentering distortion. $x_d$ and $y_d$ are the components of decentering distortion at an image point x,y.

The corrections for radial distortion and decentering distortion are independent of each other so that both corrections can be simply added together.

$$X_{lens} = x_r + x_d$$

$$Y_{lens} = y_r + y_d$$

where: $X_{lens}$ and $Y_{lens}$ are the total correction for both the radial and decentering distortion correction.

The calculation of k1,k2,k3,p1,and p2 is based on a "plumb line" method. Two images, with horizontal and vertical lines on it, are acquired in the setup of the present invention. The principle is that with no radial and decentring distortion, straight lines in the object space should be straight lines in the image acquired by the image receiving means. Any departures from a straight line can be attributed to lens distortion. These deviations can be used to estimate the distortion parameters k1 - p2 by using a least square estimation of the straight line parameters.

In the present invention, the k1,k2,k3,p1,and p2 parameters so obtained are held in a standard file which is used to initialise and setup the instrument on every occasion of operation. When a single or multiple image of the actual specimen is grabbed, the lens distortion component will be corrected by applying the parameters to the image pixel by pixel. A bilinear interpolation algorithm is also applied to smooth the corrected pixel as it is not an integer.

A further source of imaging error which must be addressed in the image analysing means relates to a mirror or any similar optical transfer element which is interposed between the image receiving means and the specimen. For the present invention, this is called mirror distortion correction. Mirror distortion is corrected by using a math model of 3rd order polynomial transformation.

The mathematic formula is as follows:

$$x = A_1 X^3 + A_2 X^2 Y + A_3 XY^2 + A_4 Y^3 + A_5 X_2 + A_6 XY + A_7 Y^2 - A_8 X + A_9 Y + A_{10}$$

$$y = B_1 X^3 + B_2 X^2 Y + B_3 XY^2 + B_4 Y^3 + B_5 X_2 + B_6 XY + B_7 Y^2 + B_8 X + B_9 Y + B_{10}$$

Where x, y are co-ordinates of dots in the grabbed image plane; X,Y are the co-ordinates for ideal location of the dot. $A_1$-$A_{10}$, $B_1$-$B_{10}$ are coefficients of the polynomial equations. The X and Y are exactly known as they are ideal dots on the grids. The $x_0$ and $y_0$ can be measured by subpixel location algorithm (see next section) to subpixel accuracy.

If we have n (n>10) dots so that we have 2*n equations of above. The twenty coefficients of $A_1$-$A_{10}$, B1 $B_{10}$ can be worked out by least squares fitting.

$$P_A = (A^t W A)^{-1} A^t W \underline{X}$$

$$P_B = (A^t W A)^{-1} A^t W \underline{Y}$$

where $A^t$ is transpose matrix of A

$$P_A = \begin{bmatrix} A_1 \\ A_2 \\ \dots \\ A_{10} \end{bmatrix}$$

$$P_B = \begin{bmatrix} B_1 \\ B_2 \\ \dots \\ B_{10} \end{bmatrix}$$

$$A1 = \begin{bmatrix} X_1^3 (X_1^2 Y_1)...Y_1 1 \\ X_2^3 (X_2^2 Y_2)...Y_2 1 \\ X_{n-1}^3 (X_{n-1}^2 Y_{n-1})...Y_{n-1} 1 \\ X_n^3 (X_n^2 Y_n)...Y_n 1 \end{bmatrix}$$

$$\underline{X} = \begin{bmatrix} x_1 \\ x_2 \\ \dots \\ x_n \end{bmatrix}$$

$$\underline{Y} = \begin{bmatrix} y_1 \\ y_2 \\ ... \\ y_n \end{bmatrix}$$

and
W is a weight matrix, usually taken as the covariance matrix.

$$W = \begin{bmatrix} q_0 / q_1 \, 0...0 \\ 0 q_0 / q_2 ...0 \\ ... \\ 00...q_0 / q_{10} \end{bmatrix}$$

Where $q_0$ is the global variance, and
$q_i$(i= 1,2..., 10) are the local variance.

As an example of how mirror correction may be performed, a flat plastic paper, with 25 (currently being used for imager mirror correction) black dots well distributed in 5x5 ideal grids, is grabbed. Because the positions of the 25 black dots are priorly exactly known($X_1,Y_1,...X_{25},Y_{25}$). They are used as control points to correct the 25 dots on the grabbed image($x_1, y_1,... x_{25}, y_{25}$). The coefficients (20 in total) of the 3rd order polynomial equation can then be worked out by means of iterative least squares estimation. These parameters are stored in the imager initialisation file. When an image is grabbed, the 3rd order polynomial transformation is applied to the image to correct the mirror distortion. A bilinear interpolation is used to interpolate the corrected pixels into integer array.

In the image analysing means of the present invention, it may also be helpful to invoke automatic subpixel localisation to improve image processing and analysing capability at high resolution. When a line on the image is measured, it is only possible by eye to roughly estimate its position down to a half pixel level of resolution. An automatic subpixel location algorithm may thus be needed to improve resolution of small elements in the image. One example of an algorithm which may be used in the present invention is called "weighted centroid subpixel location" algorithm.

In this algorithm, a small rectangular window around the dot (or line) is placed such that it covers the whole dot or interested line segment. A suitable threshold is used to eliminate background information from the window. The choice of a suitable window size can be dependent on the actual dot size or the interested line segment. Using the intensity values within this window the precise centre of the dot or line can be calculated using the following equations.

$$x = \frac{1}{M} \sum_{i1}^{n} \sum_{j1}^{m} j g_{ij} w_{ij} w_{ij}$$

$$Y = \frac{1}{M} \sum_{i...1}^{n} \sum_{j...1}^{m} i g_{ij} w_{ij} w_{ij}$$

where,

$$M = \sum_{i=1}^{n} \sum_{j=1}^{m} g_{ij} w_{ij} w_{ij}$$

$g_{ij}$ is either 1 (dot or line pixel) or 0(background), $w_{ij}$ is the grey scale value of each pixel and n, m define the window size.

The algorithm is called weighted centroid subpixel location algorithm.

This algorithm can locate a line position up to 1/50 of a pixel automatically. This algorithm may be particularly useful in obtaining an accurate line profile of an image, or in resolving small subpixel features in the image. When the profile graph cross a line is displayed, the accurate subpixel centroid of the line may be automatically displayed on the top of the profile graph. This function can also be used to verify the accuracy of correction of image stitching, the geometric accuracy of images and other related features.

The present invention may also embody standard shading correction and flat fielding correction across the entire image in order to diminish any optical nonuniformities in any part of the light path. This may be achieved by acquiring a blank image of the field without the specimen present, then applying this to specimen images for the purpose of making uniform light across the entire image.

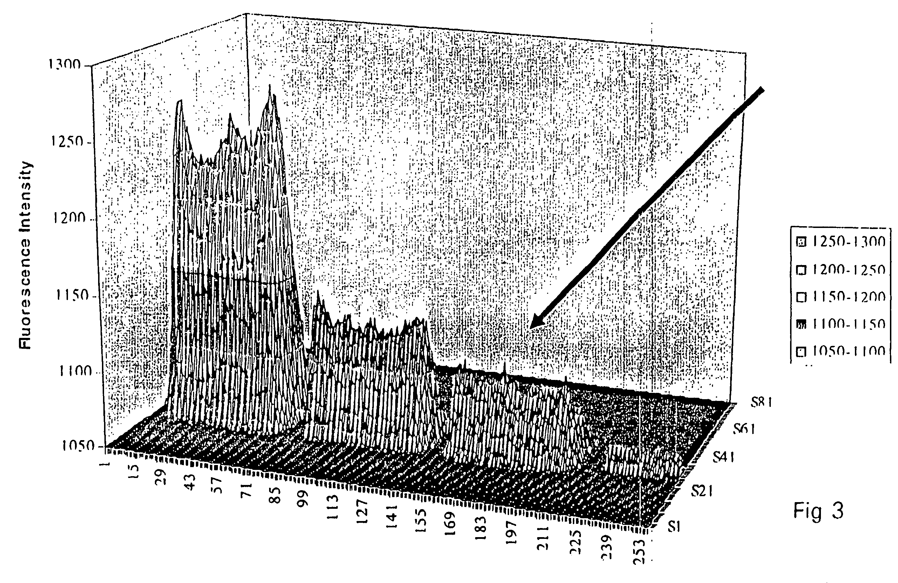

As can be seen in figure 3, it may also be that a three dimensional rendering of the data is provided to improve the ease of understanding of an end user. Figure 3 shows an output 4A flourescent end label DNA sample. It can be seen that the arrangement of the present invention provides a good, accurate and quantitative indication of relative intensities, something that cannot be achieved by manual analysis.

As has been mentioned previously, the light source 4 of the apparatus 1 of the invention has a variable wavelength. This means that the apparatus can be employed to analyse the images associated with gel slabs 3 formed from a wide variety of electrophoresis techniques simply by changing the output wavelength of the light source 4 4. In particular, it has considerable benefits if fluorescent labelling techniques are employed to produce the gel being analysed.

## Claims

1. An apparatus (1) for acquiring high resolution digital images from a large area specimen, such as the result of an electrophoresis of a fluorescent labelled sample in a gel (3), the apparatus comprising:

   a light source (4) for providing illuminating light to the specimen;
   image receiving means (5) for obtaining a high resolution image of the illuminated specimen; and
   image analysing means for analysing the obtained image to determine the location of samples on the specimen and to provide data based thereon;
   **characterised in that** the light source is a variable wavelength light source, variable across a continuous range of wavelengths,
   the position of the image receiving means relative to the specimen is varied (9) stepwise in X and Y dimensions A to selectively obtain images of a plurality of portions of the specimen, and by an X-Y high precision movement stage
   the image analysing means assembles the plurality of selectively obtained images of portions of the specimen into a single image.

2. An apparatus according to claim 1, wherein the light source (4) illuminates the specimen from above (b).

3. An apparatus according to claim 1, wherein the light source (4) illuminates the specimen from below (a).

4. An apparatus according to claim 1, wherein the light source (4) illuminates the specimen from the side of the specimen (c).

5. An apparatus according to claim 1, wherein the image receiving means (5) comprises a mirror (6) and a camera (8), the position of the mirror and camera being controlled (9), in use, to direct selectively the image of a portion of the specimen (3) to the camera.

6. An apparatus according to claim 5, wherein the image receiving means (5) also comprises a filter (7) for selecting the wavelength of light which passes to the camera (8).

7. An apparatus according to claim 5, in which the camera (8) is a CCD device.

8. An apparatus according to claim 1, wherein the image analysing means is a standard PC, appropriately configured.

9. An apparatus according to claim 1, wherein the image receiving means (5) is moved stepwise relative to the specimen (3) in X and Y directions so that the plurality of selectively obtained images cover the whole area of the specimen.

**10.** An apparatus as claimed in claim 1 or claim 9, wherein the plurality of selectively obtained images are reassembled by the image analysing means into a single image by a software stitching technique.

**11.** An apparatus as claimed in claim 1, wherein the image receiving means (5) comprises a mirror (6), a camera (8), an excitation filter for selecting the wavelength of light from the light source (4) that illuminates the specimen, and an emission filter (7) for selecting the wavelength of light which passes to the camera (8), wherein the excitation filter and the emission filter are automatically controlled so that images of each portion of the specimen are obtained at different wavelengths, either simultaneously or sequentially.

**Patentansprüche**

**1.** Gerät (1) zum Erfassen hochauflösender digitaler Bilder aus einem großflächigen Spezimen, wie beispielsweise dem Ergebnis einer Elektrophorese einer fluoreszierend etikettierten Probe in einem Gel (3), wobei das Gerät umfasst:

eine Lichtquelle (4) zum Bereitstellen illuminierenden Lichts für das Spezimen;
Bildempfangsmittel (5) zum Erlangen eines hochauflösenden Bilds des illuminierten Spezimens; und
Bildanalysemittel zum Analysieren des erlangten Bilds, um die Position von Proben auf dem Spezimen zu bestimmen und darauf beruhende Daten bereitzustellen;
**dadurch gekennzeichnet, dass** die Lichtquelle eine Lichtquelle variabler Wellenlänge ist, die über einen kontinuierlichen Bereich von Wellenlängen variabel ist,
wobei die Position des Bildempfangsmittels relativ zum Spezimen schrittweise in X- und Y-Dimensionen durch ein X-Y-Bewegungsgestell hoher Präzision variiert (9) wird, um Bilder einer Vielheit von Teilen des Spezimens selektiv zu erlangen und,
wobei das Bildanalysemittel die Vielheit selektiv erlangter Bilder von Teilen des Spezimens zu einem Einzelbild zusammensetzt.

**2.** Gerät nach Anspruch 1, wobei die Lichtquelle (4) das Spezimen von oben (b) illuminiert.

**3.** Gerät nach Anspruch 1, wobei die Lichtquelle (4) das Spezimen von unten (a) illuminiert.

**4.** Gerät nach Anspruch 1, wobei die Lichtquelle (4) das Spezimen von der Seite des Spezimens (c) illuminiert.

**5.** Gerät nach Anspruch 1, wobei das Bildempfangsmittel (5) einen Spiegel (6) und eine Kamera (8) umfasst, wobei die Position des Spiegels und der Kamera, in Gebrauch, gesteuert (9) wird, um das Bild eines Teils des Spezimens (3) selektiv zur Kamera zu lenken.

**6.** Gerät nach Anspruch 5, wobei das Bildempfangsmittel (5) außerdem einen Filter (7) zum Selektieren der Wellenlänge des Lichts umfasst, das zur Kamera (8) geleitet wird.

**7.** Gerät nach Anspruch 5, bei dem die Kamera (8) eine CCD-Vorrichtung ist.

**8.** Gerät nach Anspruch 1, wobei das Bildanalysemittel ein angemessen konfigurierter standardmäßiger PC ist.

**9.** Gerät nach Anspruch 1, wobei das Bildempfangsmittel (5) schrittweise relativ zum Spezimen (3) in X- und Y-Richtungen so bewegt wird, dass die Vielheit von selektiv erlangten Bildern die ganze Fläche des Spezimens abdeckt.

**10.** Gerät wie in Anspruch 1 oder Anspruch 9 beansprucht, wobei die Vielheit von selektiv erlangten Bildern vom Bildanalysemittel durch ein Software-Stitching-Verfahren zu einem Einzelbild neu zusammengesetzt werden.

**11.** Gerät nach Anspruch 1, wobei das Bildempfangsmittel (5) einen Spiegel (6), eine Kamera (8), einen Anregungsfilter zum Selektieren der Wellenlänge von Licht aus der Lichtquelle (4), welches das Spezimen illuminiert und einen Emissionsfilter (7) zum Selektieren der Wellenlänge von Licht umfasst, welches zur Kamera (8) geleitet wird, wobei der Anregungsfilter und der Emissionsfilter automatisch gesteuert werden, sodass Bilder jedes Teils des Spezimens, entweder simultan oder sequenziell mit verschiedenen Wellenlängen erlangt werden.

**Revendications**

1. Dispositif (1) destiné à l'acquisition d'images numériques haute résolution provenant d'un spécimen couvrant une grande surface, comme le résultat d'un échantillon marqué par luorescence dans un gel (3), l'appareil comprenant :

   une source de lumière (4) pour fournir une lumière d'éclairage au spécimen ;
   un moyen de réception d'une image (5) pour l'obtention d'une image haute résolution du spécimen illuminé ; et
   un moyen d'analyse d'une image pour l'analyse de l'image obtenue afin de déterminer l'emplacement des échantillons sur le spécimen et de fournir des données fondées sur leur emplacement ;
   **caractérisé en ce que** la source de lumière est une source de lumière à longueur d'onde variable qui est variable sur une plage continue de longueurs d'onde,
   la position du moyen de réception de l'image relativement au spécimen est variée (9) de manière graduelle dans les dimensions X et Y par un étage de mouvement de haute précision X-Y de manière à obtenir sélectivement des images d'une pluralité de parties du spécimen, et
   le moyen d'analyse d'images assemble la pluralité des images sélectivement obtenues des parties du spécimen en une image unique.

2. Dispositif selon la revendication 1, dans lequel la source de lumière (4) illumine le spécimen à partir du dessus (b).

3. Dispositif selon la revendication 1, dans lequel la source de lumière (4) illumine le spécimen à partir du dessous (a).

4. Dispositif selon la revendication 1, dans lequel la source de lumière (4) illumine le spécimen à partir du côté du spécimen (c).

5. Dispositif selon la revendication 1, dans lequel le moyen de réception de l'image (5) comprend un miroir (6) et une caméra (8), la position du miroir et de la caméra étant contrôlées (9) en cours d'utilisation de manière à diriger sélectivement l'image d'une partie du spécimen (3) vers la caméra.

6. Dispositif selon la revendication 5, dans lequel le moyen de réception de l'image (5) comprend également un filtre (7) pour la sélection de la longueur d'onde de la lumière qui passe à la caméra (8).

7. Dispositif selon la revendication 5, dans lequel la caméra (8) est un dispositif CCD.

8. Dispositif selon la revendication 1, dans lequel le moyen d'analyse de l'image (5) est un PC standard, configuré de manière appropriée.

9. Dispositif selon la revendication 1, dans lequel le moyen de réception de l'image (5) est déplacé graduellement relativement au spécimen (3) dans les directions X et Y de manière à ce que la pluralité des images obtenues sélectivement couvrent la totalité de la surface du spécimen.

10. Dispositif selon la revendication 1 ou la revendication 9, dans lequel la pluralité des images obtenues sélectivement sont assemblées par le moyen d'analyse d'images en une image unique par une technique de maillage informatique.

11. Dispositif selon la revendication 1, dans lequel le moyen de réception d'images (5) comprend un miroir (6), une caméra (8), un filtre d'excitation pour la sélection de la longueur d'onde de la lumière provenant de la source de lumière (4) qui illumine le spécimen et un filtre d'émission (7) pour la sélection de la longueur d'onde de la lumière qui passe à la caméra (8) dans lequel le filtre d'excitation et le filtre d'émission sont automatiquement contrôlés de manière à ce que les images de chaque partie du spécimen soient obtenues à différentes longueurs d'ondes, soit simultanément, soit séquentiellement.

Fig.1.

EP 0 990 896 B1

Fig. 2B

Fig. 2A

12

Fig 2C

Fig 3

Fluorescence Intensity

1300
1250
1200
1150
1100
1050

1250-1300
1200-1250
1150-1200
1100-1150
1050-1100

S81
S61
S41
S21
S1

1 15 29 43 57 71 85 99 113 127 141 155 169 183 197 211 225 239 253

EP 0 990 896 B1

14

**EP 0 990 896 B1**

**REFERENCES CITED IN THE DESCRIPTION**

**Patent documents cited in the description**

- WO 9521377 A
- DE 4011730 A
- WO 9602824 A
- US 4874492 A
- EP 0214713 B1
- EP 0214713 H1
- US 5672881 A
- WO 9633406 A